# DEMANDE DE BREVET EUROPEEN

(11) **EP 3 258 579 A1**
(43) Date de publication de la demande: **20.12.2017**
(21) Numéro de dépôt: 17168598.5
(22) Date de dépôt: 28.04.2017
(51) Int. Cl.: H02K 11/04, H02K 5/22, H02K 5/14, H02K 19/34, H02K 9/22, H02K 11/33, H02K 19/26, H02K 5/18, H02K 11/05, H02K 19/36

(54) **MACHINE ÉLECTRIQUE TOURNANTE À ELECTRONIQUE DE PUISSANCE AMÉLIORÉE**

(30) Priorité: 14.06.2016 FR 1655517
(71) Demandeur: VALEO EQUIPEMENTS ELECTRIQUES MOTEUR, 94046 Créteil Cedex (FR)
(72) Inventeur: JUGOVIC, Svetislav, 94046 CRETEIL CEDEX (FR); TAUVRON, Fabrice, 94046 CRETEIL CEDEX (FR); BOUDJEMAI, Farouk, 94046 CRETEIL CEDEX (FR); DE LAMARRE, Laurent, 94046 CRETEIL CEDEX (FR); RAGAINE, Pierre-François, 94046 CRETEIL CEDEX (FR); TEMPEZ, Hugues, 62630 ETAPLES SUR MER (FR)

(57) **Abrégé**

L'invention porte principalement sur une machine électrique tournante pour véhicule automobile caractérisée en ce qu'elle comporte un dissipateur thermique (65), deux modules de puissance (50) intégrés dans le dissipateur thermique (65) comportant chacun des éléments redresseurs (53) formant trois bras de pont redresseur (52), des terminaux de connexion (58) associés aux bras de pont redresseur (52) et une unité de commande apte à piloter les bras de pont redresseur, et un connecteur (61) établissant des connexions électriques notamment entre les terminaux de connexion (58) des modules de puissance (50) et des sorties de phase de la machine électrique tournante.

## Description

La présente invention porte sur une machine électrique tournante à électronique de puissance améliorée. L'invention trouve une application particulièrement avantageuse, mais non exclusive, dans le domaine des alternateurs pour véhicules automobiles. Un tel alternateur transforme de l'énergie mécanique en énergie électrique et peut être réversible.

Un tel alternateur réversible appelé alterno-démarreur permet de transformer de l'énergie électrique en énergie mécanique notamment pour démarrer le moteur thermique du véhicule.

De façon connue en soi, un alternateur comporte un carter et, à l'intérieur de celui-ci, un rotor à griffes, solidaire en rotation d'un arbre, et un stator qui entoure le rotor avec présence d'un entrefer.

Le rotor comporte deux roues polaires présentant chacune un flasque d'orientation transversale pourvu à sa périphérie externe de griffes d'orientation axiale. Les griffes des roues polaires sont imbriquées les unes par rapport aux autres. Un noyau cylindrique est intercalé axialement entre les flasques des roues. Ce noyau porte à sa périphérie externe une bobine d'excitation formée autour d'un élément isolant intercalé radialement entre le noyau et la bobine.

Par ailleurs, le stator comporte un corps constitué par un empilage de tôles minces formant une couronne, dont la face intérieure est pourvue d'encoches ouvertes vers l'intérieur pour recevoir des enroulements de phase. Ces enroulements traversent les encoches du corps du stator et forment des chignons faisant saillie de part et d'autre du corps du stator. Les enroulements de phase sont obtenus par exemple à partir d'un fil continu recouvert d'émail ou à partir d'éléments conducteurs en forme d'épingles reliées entre elles par soudage.

Les enroulements de phase sont reliés électriquement à des modules électroniques de puissance via leur sortie de phase. Ces modules de puissance forment un pont redresseur de tension. Généralement, chaque module de puissance comporte une unité de commande apte à piloter deux bras de pont comportant chacun deux éléments redresseurs constitués par exemple par des transistors du type MOSFET. La commande des bras de pont est effectuée notamment en fonction de la température du stator, de la position et de la vitesse du rotor, ainsi que de paramètres de fonctionnement du moteur thermique retournés par le calculateur moteur.

Pour un stator ayant deux systèmes triphasés soit six phases au total, les configurations actuelles nécessitent d'utiliser trois modules de puissance, ce qui constitue un ensemble encombrant ne permettant pas de s'adapter à des machines électriques de diamètre réduit, ou d'intégrer aisément des nouvelles fonctions souhaitées par les constructeurs automobile, comme par exemple une fonction de freinage récupératif ou d'assistance à l'arrêt du moteur thermique dans le cadre de système de type "stop and start" (ou système d'arrêt et de re-démarrage automatique du moteur).

L'invention vise à remédier efficacement à ces inconvénients en proposant une machine électrique tournante pour véhicule automobile caractérisée en ce qu'elle comporte:
- un dissipateur thermique,
- deux modules de puissance intégrés dans le dissipateur thermique comportant chacun des éléments redresseurs formant trois bras de pont redresseur, des terminaux de connexion associés aux bras de pont redresseur et une unité de commande apte à piloter les bras de pont redresseur, et
- un connecteur établissant des connexions électriques notamment entre les terminaux de connexion des modules de puissance et des sorties de phase de la machine électrique tournante.

La machine électrique tournante comporte donc deux uniques modules de puissance. De cette manière, les deux modules de puissance peuvent piloter toutes les phases d'un bobinage d'un stator de la machine électrique tournante. Cela présente un avantage économique, dans la mesure où cela permet de supprimer un module de puissance. En outre, l'interconnexion des modules de puissance avec l'électronique de commande est plus aisée du fait qu'il n'y ait que deux modules de puissance, ce qui facilite la mise en oeuvre des fonctions de type freinage récupératif ou aide à l'arrêt du moteur thermique. De plus, cela peut également permettre de réduire l'encombrement du dissipateur thermique et du connecteur.

Selon une réalisation, les modules de puissance sont positionnés dans des logements correspondants ménagés dans le dissipateur thermique.

Selon une réalisation, une couche de colle est interposée entre les modules de puissance et un fond de chaque logement correspondant.

Selon une réalisation, chaque module de puissance comporte une unité de commande et trois bras de pont chacun étant formé par deux éléments redresseurs.

Selon une réalisation, les éléments redresseurs sont des transistors MOSFET.

Dans une variante de réalisation, chaque module de puissance peut comporter des diodes aptes à redresser le courant des phases du bobinage du stator.

Selon une réalisation, le connecteur comporte un corps réalisé en matériau électriquement isolant et un ensemble de pistes conductrices portés par ledit corps. Les pistes conductrices sont notamment surmoulées au moins en partie dans le corps. Selon cette réalisation, le connecteur comporte, en outre, des zones de connexion formée par des portions des pistes conductrices débouchantes. On entend par débouchante le fait que ces portions des pistes conductrices ne sont pas surmoulées dans le corps. Les zones de connexion permettent de connecter les terminaux de connexion des modules de puissance aux sorties de phase. Le connecteur permet également de faire l'interconnexion entre les modules de puissance.

Selon une réalisation, ladite machine électrique tournante comporte en outre un module de régulation pour réguler une tension appliquée à un bobinage rotorique, ledit module de régulation étant intégré dans le dissipateur thermique. L'espace libéré sur le dissipateur permet l'installation d'un module de régulation de la tension du bobinage rotorique sur le dissipateur. On obtient ainsi un ensemble compact adapté à l'implantation sur des machines de faible diamètre.

Selon une réalisation, ledit module de régulation comporte des terminaux de connexion soudés sur des zones de connexion du connecteur. Cela permet l'alimentation du module de régulation et son interconnexion avec les modules de puissance.

Selon une réalisation, le module de régulation est positionné dans un logement correspondant ménagé dans le dissipateur thermique.

Selon une réalisation, une couche de colle est interposée entre le module de régulation et le dissipateur thermique. Par exemple, la couche de colle est interposée entre le module de régulation et un fond du logement correspondant.

Selon une réalisation, la machine comporte en outre un module de régulation pour réguler une tension appliquée à un bobinage rotorique, le module de régulation étant intégré au connecteur. Cela permet de faciliter l'interconnexion des différents modules avec l'électronique de commande, ce qui facilite la mise en oeuvre des fonctions de type freinage récupératif ou aide à l'arrêt du moteur thermique

Selon une réalisation, le connecteur comporte une cavité pour recevoir le module de régulation. Dans cette réalisation, des plots d'accueil situés dans le prolongement de pistes du connecteur débouchent dans la cavité pour assurer une interconnexion avec le module de régulation.

Selon une réalisation, des conducteurs électriques sont positionnés entre les plots d'accueil et les composants du module de régulation. Cela permet à la fois l'alimentation du module de régulation et l'interconnexion avec les modules de puissance.

Selon une réalisation, le connecteur comporte une portion plastique surmoulée sur les bords d'une plaque réalisée dans un matériau thermiquement conducteur. Une telle plaque permet d'améliorer l'évacuation de la chaleur.

Selon une réalisation, la plaque forme un fond de la cavité.

Selon une réalisation, une couche de matériau thermiquement conductrice est interposée entre la plaque et une face interne du dissipateur thermique de ladite machine électrique tournante. Cela permet également de faciliter l'évacuation de la chaleur.

Selon une réalisation, la plaque est centrée dans le fond de la cavité. Selon une réalisation, les plots d'accueil sont disposés autour de la plaque.

Selon une réalisation, une couche de colle est interposée entre le module de régulation et le connecteur. Selon une réalisation, la couche de colle est interposée entre le module de régulation et le fond de la cavité.

Selon une réalisation, le dissipateur thermique comporte un dégagement ayant une forme complémentaire du module de régulation.

Selon une réalisation, le connecteur et le dissipateur thermique présentent un pourtour fermé délimitant une ouverture. Cela permet de rigidifier l'ensemble connecteur-dissipateur thermique.

Selon une réalisation, le connecteur comporte deux ensembles de pattes de connexion pour assurer une connexion avec des sorties de phase, les deux ensembles s'étendant suivant deux secteurs angulaires distincts l'un par rapport à l'autre.

Selon une réalisation, chaque ensemble de pattes de connexion s'étend en vis-à-vis d'un module de puissance correspondant.

Selon une réalisation, les deux ensembles de pattes de connexion sont espacés angulairement entre eux d'un angle de 120 degrés.

Selon une réalisation, le connecteur comporte un ensemble de pattes de connexion s'étendant suivant un même secteur angulaire pour assurer une connexion avec des sorties de phase.

Selon une réalisation, les pattes de connexion sont positionnées entre les deux modules de puissance.

Selon une réalisation, ladite machine électrique tournante comporte un porte-balais rapporté fixé sur le connecteur par vissage d'une interface de connexion.

Selon une réalisation, le connecteur est fixé sur le dissipateur thermique au moyen de vis établissant une connexion à une borne positive.

Selon une réalisation, l'ensemble formé par le connecteur et le dissipateur thermique est fixé sur un palier de la machine électrique au moyen de vis établissant une connexion entre les pistes du connecteur et une masse de la machine électrique tournante.

Selon une réalisation, les terminaux de connexion des modules de puissance sont soudés sur des zones de connexion correspondante du connecteur.

Selon une réalisation, chaque logement est rempli d'une couche de protection.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe longitudinale d'un alternateur selon un exemple de la présente invention.
La figure 2 est une vue en perspective montrant l'extrémité arrière de l'alternateur selon l'exemple de la figure 1.
La figure 3 est une vue en perspective éclatée du connecteur, des modules électroniques de puissance, du module de régulation, et du dissipateur thermique de l'alternateur selon un exemple d'un premier more de réalisation.
La figure 4 est une vue en perspective éclatée des modules électroniques de puissance et de régulation, et du dissipateur thermique de l'alternateur selon le mode de réalisation de la figure 3.
La figure 5 est une vue en perspective des modules électroniques de puissance et de régulation installés dans des logements correspondants du dissipateur thermique de l'alternateur selon le mode de réalisation de la figure 3.
La figure 6 est une vue en perspective de dessus du sous-ensemble formé par le dissipateur thermique et le connecteur de l'alternateur selon le mode de réalisation de la figure 3.
La figure 7 est une vue en perspective de dessous du sous-ensemble formé par le dissipateur thermique et le connecteur de l'alternateur selon le mode de réalisation de la figure 3.
La figure 8 est une vue en perspective illustrant une variante du positionnement des sorties de phase du bobinage statorique de l'alternateur selon la présente invention.
La figure 9 est une vue en perspective éclatée des modules électroniques de puissance et du dissipateur thermique de l'alternateur selon un exemple d'un deuxième mode de réalisation.
Les figures 10 et 11 sont des vues en perspective de dessous et de dessus du connecteur de l'alternateur selon le mode de réalisation de la figure 9.

Les éléments identiques, similaires, ou analogues conservent la même référence d'une figure à l'autre.

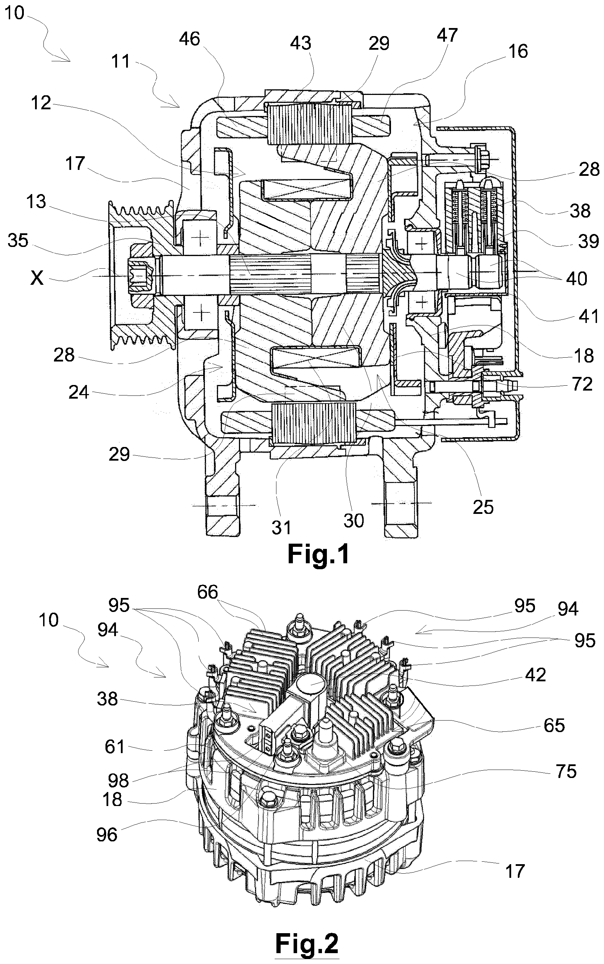

On a représenté sur la figure 1 un alternateur 10 compact et polyphasé, notamment pour véhicule automobile. L'alternateur 10 est apte à transformer de l'énergie mécanique en énergie électrique et pourra être réversible. Un tel alternateur réversible, appelé alterno-démarreur, permet de transformer de l'énergie électrique en énergie mécanique notamment pour démarrer le moteur thermique du véhicule.

Cet alternateur 10 comporte un carter 11 et, à l'intérieur de celui-ci, un rotor à griffes 12 monté sur un arbre 13, et un stator 16, qui entoure le rotor 12 avec présence d'un entrefer entre la périphérie externe du rotor 12 et la périphérie interne du stator 16. L'axe X suivant lequel s'étend l'arbre 13 forme l'axe de rotation du rotor 12.

Le carter 11 comporte des paliers avant 17 et arrière 18 portant le stator 16. Les paliers 17, 18 sont de forme creuse et portent chacun centralement un roulement à billes pour le montage à rotation de l'arbre 13.

Plus précisément, le rotor 12 comporte deux roues polaires 24, 25 présentant chacune un flasque 28 d'orientation transversale pourvu à sa périphérie externe de griffes 29 par exemple de forme trapézoïdale et d'orientation axiale. Les griffes 29 d'une roue 24, 25 sont dirigées axialement vers le flasque 28 de l'autre roue. La griffes 29 d'une roue polaire 24, 25 pénètrent dans un espace d'entredent existant entre deux griffes 29 voisines de l'autre roue polaire, de sorte que les griffes 29 des roues polaires 24, 25 sont imbriquées les unes par rapport aux autres.

Un noyau cylindrique 30 est intercalé axialement entre les flasques 28 des roues 24, 25. En l'occurrence, le noyau 30 consiste en deux demi-noyaux appartenant chacun à l'un des flasques 28. Ce noyau 30 porte à sa périphérie externe un bobinage rotorique d'excitation 31.

L'arbre 13 pourra être emmanché à force dans l'alésage central des roues polaires 24, 25. Du côté de son extrémité avant, l'arbre 13 pourra comporter une partie filetée pour la fixation d'une poulie 35. La poulie 35 appartient à un dispositif de transmission de mouvements à au moins une courroie entre l'alternateur 10 et le moteur thermique du véhicule automobile.

Le palier arrière 18 porte un porte-balais 38 muni de balais 39 destinés à venir frotter contre des bagues 40 d'un collecteur 41 pour assurer l'alimentation du bobinage du rotor 12. Plus précisément, le porte-balais 38 comporte un boîtier ayant des logements destinés à recevoir chacun un balai. En outre, un élément protecteur rapporté 42 visible sur la figure 2 pourra être fixé par exemple par encliquetage via une liaison glissière du côté de l'extrémité des balais 39 destinée à venir frotter contre les bagues 40. Cet élément protecteur 42 positionné autour des balais 39 et des bagues 40 correspondantes permet d'assurer la protection de l'ensemble vis-à-vis de l'environnement extérieur.

Par ailleurs, le stator 16 comporte un corps 43 en forme de paquet de tôles doté d'encoches équipées d'isolant d'encoches pour le montage des phases du stator 16. Chaque phase comporte au moins un enroulement de phase traversant les encoches du corps de stator 43 et forme, avec toutes les phases, un chignon avant 46 et un chignon arrière 47 de part et d'autre du corps de stator 43.

Les enroulements de phase sont obtenus par exemple à partir d'un fil continu recouvert d'émail ou à partir d'éléments conducteurs en forme d'épingles reliées électriquement entre elles par exemple par soudage. Les enroulements de phase sont reliés électriquement à des modules électroniques de puissance 50 via leur sortie de phase. Ces modules de puissance 50 forment un pont redresseur de tension pour transformer la tension alternative générée par l'alternateur 10 en une tension continue pour alimenter notamment la batterie et le réseau de bord du véhicule.

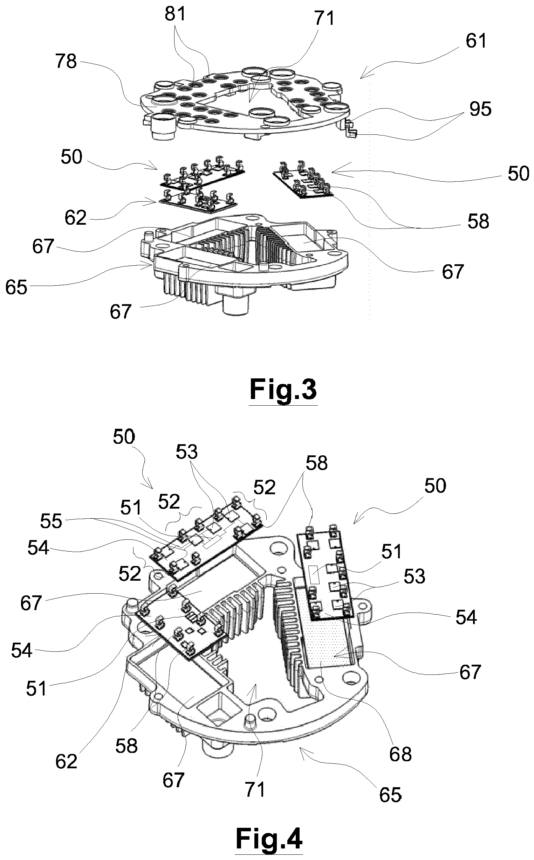

Plus précisément, comme cela est visible sur la figure 4, la machine électrique tournante comporte deux modules de puissance 50. Chaque module de puissance 50 comporte une unité de commande 51 apte à piloter trois bras de pont 52 comportant chacun deux éléments redresseurs 53. Les éléments redresseurs 53 sont par exemple constitués par des transistors du type MOSFET.

Ainsi, dans l'exemple d'une machine électrique tournante qui présente un bobinage en double triphasé, chaque module de puissance pilote trois phases du stator 16.

Dans une variante de réalisation, chaque module de puissance peut comporter plusieurs diodes.

Ces composants 51, 52, 53 ainsi que d'autres composants passifs (résistances et condensateurs notamment) sont implantés sur une carte électronique 54 comportant des traces 55 ménagées dans une couche de matériau conducteur notamment une couche de cuivre. La couche de cuivre recouvre par exemple une couche de céramique portant également une deuxième couche de cuivre du côté opposé à la face de la carte 54 portant les composants électroniques. Dans cet exemple, les différents composants sont implantés sur la carte 54 par brasage.

Les composants sont reliés électriquement aux traces 55 de la carte électronique 54 par exemple par un procédé de câblage filaire dit de "wire bonding" en anglais. Des terminaux de connexion 58 sont associés aux différents modules de puissance 50 pour l'interconnexion avec les pistes 60 d'un connecteur 61 décrit plus en détail ci-après.

La machine électrique 10 comporte également un module de régulation 62 pour réguler une tension appliquée à un bobinage rotorique. Ce module de régulation 62 comporte une unité de commande 51 et des composants électroniques associés.

Par exemple, l'unité de commande 51 ainsi que les composants électroniques associés du module de régulation 62 sont implantés sur une carte électronique 54 comportant des traces 55 ménagées dans une couche de matériau conducteur notamment une couche de cuivre.

Dans un premier mode de réalisation, comme on peut le voir sur les figures 3, 4, et 5, les modules de puissance 50 ainsi que le module de régulation 62 sont intégrés dans un dissipateur thermique 65, c'est-à-dire qu'ils sont positionnés chacun à l'intérieur d'un logement 67 correspondant ménagé dans le dissipateur thermique 65.

De préférence, afin d'améliorer l'évacuation de la chaleur diffusée par les différents modules 50 et 62, une couche de colle 68 thermiquement conductrice est interposée entre les modules de puissance 50 et un fond de chaque logement 67 correspondant ainsi qu'entre le module de régulation 62 et un fond du logement 67 correspondant. De préférence, la couche de colle 68 est déposée entre la face de la carte ne portant pas de composant et le fond du logement 67. La colle permet également la fixation des différents modules 50, 62 dans les logements 67.

Chaque logement 67 peut être rempli d'une couche de protection telle que du gel ou de la résine afin de protéger les composants électroniques de l'environnement extérieur. En variante, chaque logement 67 peut être fermé par un capot respectif.

Avantageusement, le dissipateur thermique 65 comporte une pluralité d'ailettes 66 s'étendant en saillie depuis la face externe du corps du dissipateur 65. Par « face externe », on désigne la face du dissipateur opposée à la face interne dudit dissipateur qui est en vis-à-vis du stator.

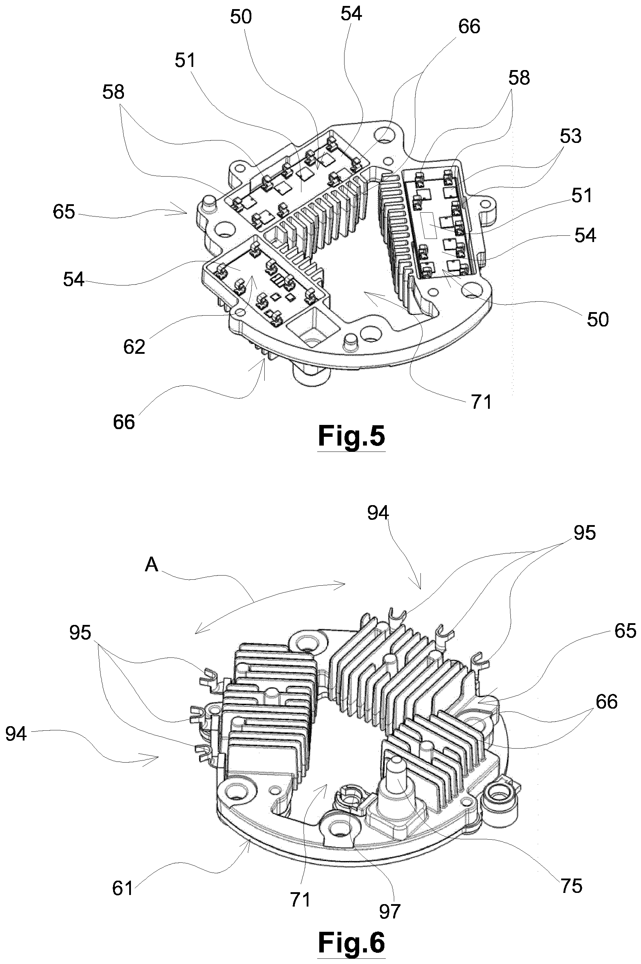

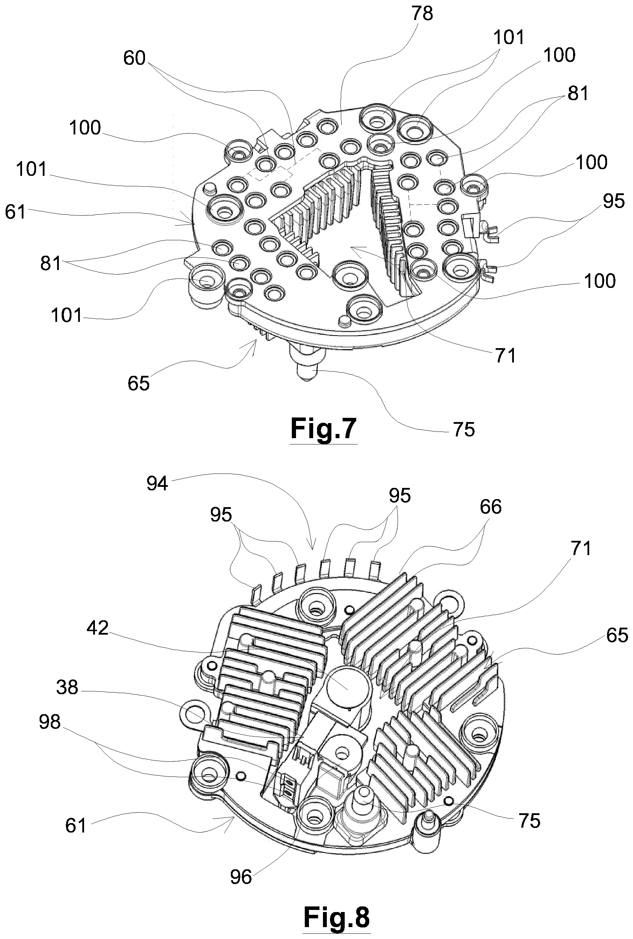

Le connecteur 61 et le dissipateur thermique 65 présentent de préférence un pourtour fermé délimitant une ouverture 71 visible notamment sur les figures 5 et 7. Cela permet de faciliter l'intégration du porte-balais 38 ainsi que la circulation d'air à l'intérieur de l'alternateur 10. A cet effet, l'alternateur 10 comporte des pales 72 montées solidaires en rotation sur les extrémités axiales du rotor 12, tel que montré sur la figure 1.

Le connecteur 61 établit des connexions électriques notamment entre les terminaux 58 des modules de puissance 50 et des sorties de phase de l'alternateur 10. Le connecteur 61 établit également des connexions électriques entre les composants des cartes électroniques 54 et le potentiel positif via une borne positive B+ référencée 75. La borne positive 75 est, par exemple, disposée sur le dissipateur thermique 65. En outre, le connecteur 61 établit également des connexions électriques entre les composants des cartes électroniques 54 et une masse du véhicule notamment via le palier arrière 18 ou le dissipateur thermique 65.

A cet effet, comme cela est illustré sur la figure 7, le connecteur 61 comporte un corps 78, en forme générale de plaque réalisée en matériau isolant, surmoulé sur un ensemble de pistes conductrices 60 dont certaines ont été représentées en traits discontinus. Les connexions entre les terminaux 58 des modules de puissance 50 et les pistes 60 sont effectuées par exemple par soudure laser à travers des zones de connexion 81. Chaque zone de connexion 81 est formée par une portion de piste conductrice 60 qui n'est pas surmoulée par le corps 78. Le module de régulation 62 comporte également des terminaux 58 en saillie soudés sur des zones de connexion 81 correspondantes du connecteur 61.

Comme cela est visible sur les figures 2, 6 et 8, certaines pistes 60 débordent radialement vers l'extérieur du corps du connecteur 78 en étant aménagés à leurs extrémités libres sous forme de pattes de connexion 95 pour établir la connexion avec les sorties de phase du bobinage statorique.

Dans le mode de réalisation des figures 2 et 6 représentant une machine double triphasée, le connecteur 61 comporte deux ensembles 94 de trois pattes de connexion 95 destinées à être connectées avec des sorties de phase. Les deux ensembles 94 s'étendent suivant deux secteurs angulaires distincts l'un par rapport à l'autre. On précise qu'un secteur angulaire est défini par une zone angulaire suivant laquelle les pattes de connexion 95 (et donc les sorties de phase du bobinage statorique) sont espacées entre elles d'un intervalle angulaire sensiblement identique.

Chaque ensemble 94 de pattes de connexion 95 s'étend en vis-à-vis d'un module de puissance 50 correspondant. Dans un exemple de réalisation, les deux ensembles 94 de pattes de connexion 95 sont espacés angulairement entre eux d'un angle A de l'ordre de 120 degrés.

Dans le mode de réalisation de la figure 8 représentant également une machine double triphasée, le connecteur 61 comporte un ensemble 94 de pattes de connexion 95 s'étendant suivant un même secteur angulaire. Les pattes de connexion 95 pourront alors être positionnées entre les deux modules de puissance 50.

Le porte-balais 38 rapporté pourra être fixé sur le connecteur 61 par vissage d'une interface de connexion 96. Cette interface de connexion 96 assure la connexion du porte-balais 38 avec le connecteur 61 pour alimenter les balais 39.

A cet effet, deux pistes d'alimentation permettant d'alimenter les balais 39 s'étendent depuis l'interface de connexion 96 jusqu'à des zones de soudage 98 avec les tresses des balais. Du côté de leur extrémité située au niveau de l'interface de connexion 96, les pistes d'alimentation pourront présenter une forme en demi-lune pour l'interconnexion avec des formes correspondantes 97 du connecteur 61 visibles en figure 6.

Le connecteur 61 est fixé sur le dissipateur thermique 65 par exemple au moyen de vis. La fixation du connecteur 61 sur le dissipateur thermique 65 permet d'établir une connexion du connecteur 61 à la borne positive B+ 75. A cet effet, les vis traversent des ouvertures correspondantes du connecteur 61 référencées 100 sur la figure 7.

Le sous-ensemble formé par le connecteur 61 et le dissipateur thermique 65 est fixé sur le palier arrière de la machine électrique par exemple au moyen de vis établissant une connexion entre les pistes du connecteur 61 et une masse de la machine électrique tournante. A cet effet, les vis traversent des ouvertures correspondantes du connecteur 61 référencées 101. Des canons isolants positionnés autour des vis pourront être prévus pour éviter d'éventuels courts-circuits.

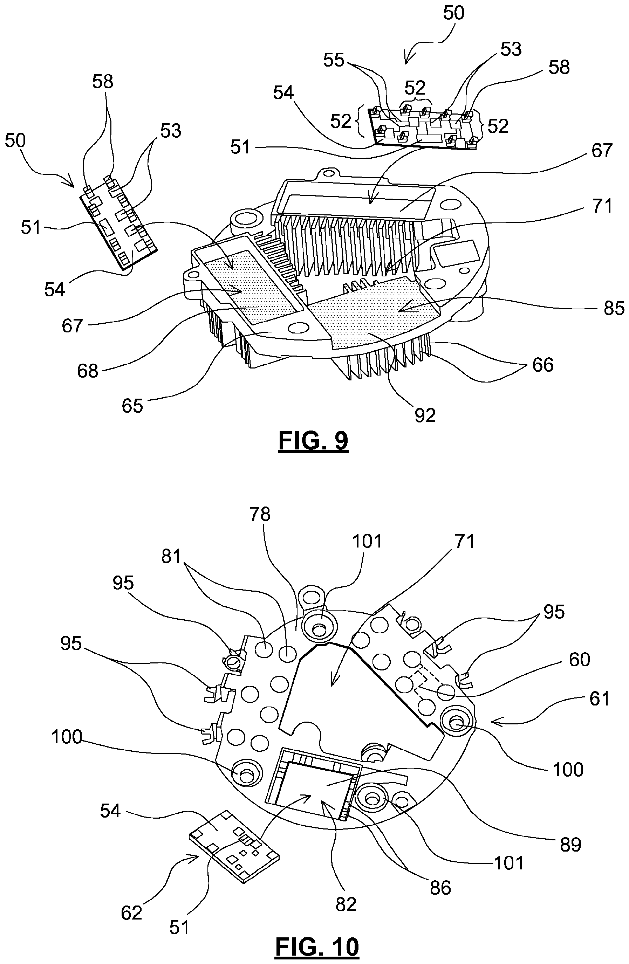

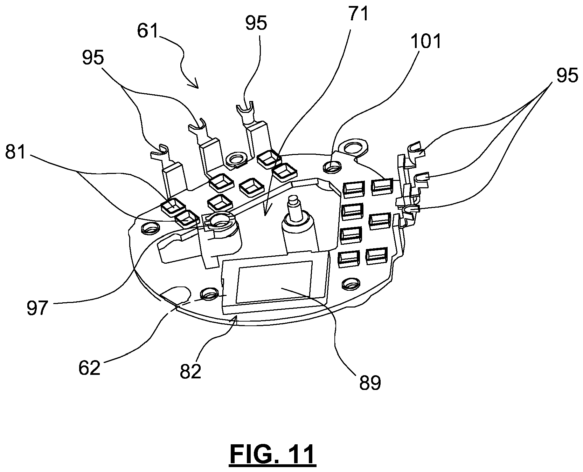

Dans un deuxième mode de réalisation représenté sur les figures 9, 10 et 11, le module de régulation 62 est intégré au connecteur 61. A cet effet, le connecteur 61 comporte une cavité 82 pour recevoir le module de régulation 62. Afin de faciliter l'assemblage entre le dissipateur thermique 65 et le connecteur 61, le dissipateur thermique 65 comporte un dégagement 85 sur sa face interne comme cela est montré sur la figure 9. Par « face interne », on désigne la face du dissipateur qui est en vis-à-vis du stator. Ce dégagement 85 présente une forme complémentaire du module de régulation 62 ou plus précisément des parois en saillie du connecteur 61 délimitant la cavité 82. Dans un exemple de réalisation, la cavité 82 peut être remplie d'une couche de protection telle que du gel ou de la résine afin de protéger les composants électroniques de l'environnement extérieur. En variante, la cavité 82 peut être fermée par un capot.

Comme on peut le voir sur la figure 10, des plots d'accueil 86 situés dans le prolongement des pistes 60 du connecteur 61 débouchent dans la cavité 82 pour assurer une interconnexion avec le module de régulation 62. Les composants du module de régulation 62 sont reliés électriquement aux plots d'accueil 86 par exemple par un procédé de câblage filaire dit de "wire bonding" en anglais. Ainsi des conducteurs électriques sont positionnés entre les plots d'accueil 86 et les composants du module de régulation permettant à la fois l'alimentation du module de régulation 62 et l'interconnexion avec les modules de puissance 50.

Le corps du connecteur 78 comporte une portion plastique surmoulée sur les bords d'une plaque 89 réalisée dans un matériau thermiquement conducteur formant le fond de la cavité 82. Le corps du connecteur 78 délimite ainsi une fenêtre autour de la plaque 89. Par exemple, la plaque 89 est centrée dans le fond de la cavité 82. Toujours par exemple, les plots d'accueil 86 sont disposés autour de la plaque.

Dans un exemple de réalisation, une couche de matériau thermiquement conductrice 92 est interposée entre la plaque 89 et une face interne du dissipateur thermique 65, notamment une face du dégagement 85, tel que montré en figure 9.

Dans ce deuxième mode de réalisation, seul le module de régulation est aménagé différemment. Les autres caractéristiques et éléments de l'invention sont identiques ou essentiellement identiques à ceux exposés dans la description du premier mode de réalisation.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Machine électrique tournante (10) pour véhicule automobile **caractérisée en ce qu'**elle comporte :
- un dissipateur thermique (65),
- deux modules de puissance (50) intégrés dans le dissipateur thermique (65) comportant chacun des éléments redresseurs (53) formant trois bras de pont redresseur (52), des terminaux de connexion (58) associés aux bras de pont redresseur (52) et une unité de commande (51) apte à piloter les bras de pont redresseur (52), et
- un connecteur (61) établissant des connexions électriques notamment entre les terminaux de connexion (58) des modules de puissance (50) et des sorties de phase de la machine électrique tournante (10).

2. Machine électrique tournante selon la revendication 1, **caractérisée en ce que** chaque bras de pont (52) est formé par deux éléments redresseurs (53).

3. Machine électrique tournante selon la revendication 1 ou 2, **caractérisée en ce qu'**elle comporte en outre un module de régulation (62) pour réguler une tension appliquée à un bobinage rotorique (31), ledit module de régulation étant intégré dans le dissipateur thermique (65).

4. Machine électrique tournante selon la revendication 3, **caractérisée en ce que** ledit module de régulation (62) comporte des terminaux de connexion (58) soudés sur des zones de connexion (81) du connecteur (61).

5. Machine électrique tournante selon la revendication 3 ou 4, **caractérisée en ce que** le module de régulation (62) est positionné dans un logement (67) correspondant ménagé dans le dissipateur thermique (65).

6. Machine électrique tournante selon la revendication 5, **caractérisée en ce qu'**une couche de colle (68) est interposée entre le module de régulation (62) et le dissipateur thermique (65).

7. Machine électrique tournante selon la revendication 1 ou 2, **caractérisée en ce qu'**elle comporte en outre un module de régulation (62) pour réguler une tension appliquée à un bobinage rotorique (31), le module de régulation (62) étant intégré au connecteur (61).

8. Machine électrique tournante selon la revendication 7, **caractérisée en ce que** le connecteur (61) comporte une cavité (82) pour recevoir le module de régulation (62) et **en ce que** des plots d'accueil (86) situés dans le prolongement de pistes (60) du connecteur (61) débouchent dans la cavité (82) pour assurer une interconnexion avec le module de régulation (62).

9. Machine électrique tournante selon l'une quelconque des revendications 1 à 8, **caractérisée en ce que** le connecteur (61) et le dissipateur thermique présentent un pourtour fermé délimitant une ouverture (71).

10. Machine électrique tournante selon l'une quelconque des revendications 1 à 9, **caractérisée en ce que** le connecteur (61) comporte deux ensembles (94) de pattes de connexion (95) pour assurer une connexion avec des sorties de phase, les deux ensembles (94) s'étendant suivant deux secteurs angulaires distincts l'un par rapport à l'autre.

11. Machine électrique tournante selon l'une quelconque des revendications 1 à 9, **caractérisée en ce que** le connecteur (61) comporte un ensemble (94) de pattes de connexion (95) s'étendant suivant un même secteur angulaire pour assurer une connexion avec des sorties de phase.

12. Machine électrique tournante selon l'une quelconque des revendications 1 à 11, **caractérisée en ce qu'**elle comporte un porte-balais (38) rapporté fixé sur le connecteur (61) par vissage d'une interface de connexion (96).

13. Machine électrique tournante selon l'une quelconque des revendications 1 à 12, **caractérisée en ce que** le connecteur (61) est fixé sur le dissipateur thermique (65) au moyen de vis établissant une connexion à une borne positive (75).

14. Machine électrique tournante selon l'une quelconque des revendications 1 à 13, **caractérisée en ce que** l'ensemble (94) formé par le connecteur (61) et le dissipateur thermique (65) est fixé sur un palier (18) de la machine électrique au moyen de vis établissant une connexion entre des pistes (60) du connecteur (61) et une masse de la machine électrique tournante.

15. Machine électrique tournante selon l'une quelconque des revendications 1 à 14, **caractérisée en ce que** les terminaux de connexion (58) des modules de puissance (50) sont soudées sur des zones de connexion (81) correspondante du connecteur (61).
